# EUROPEAN PATENT SPECIFICATION

(11) **EP 0 464 847 B1**
(45) Date of publication and mention of the grant of the patent: **30.08.1995**
(21) Application number: 91111225.8
(22) Date of filing: 05.07.1991
(51) Int. Cl.: C08F 297/04, C08G 81/02

(54) **Sequential coupling in formation of resinous block copolymers**
Sequentielle Bindung für die Herstellung von Harzblockpolymeren
Liaisons séquentielles dans la formation de polymères bloques résineux

(30) Priority: 06.07.1990 US 549031
(43) Date of publication of application: 08.01.1992
(73) Proprietor: PHILLIPS PETROLEUM COMPANY, Bartlesville Oklahoma 74004 (US)
(72) Inventor: Farrar, Ralph Colemen, Jr., Bartlesville, OK 74006 (US); Moczygemba, George Anthony, Bartlesville, OK 74006 (US); Trepka, William James, Bartlesville, OK 74003 (US)
(74) Representative: Dost, Wolfgang, Dr.rer.nat., Dipl.-Chem.

(56) References cited:
- EP-A- 0 344 140
- EP-A- 0 436 225
- WO-A-89/10378
- US-A- 4 304 886
- US-A- 4 417 029

## Description

### Background of the Invention

This invention relates to resinous copolymers. In one aspect, this invention relates to a polymerization process for the production of polymodal resinous block copolymers with improved melt strength properties.

Resinous block copolymers have been produced by methods employing various sequential polymerization steps. Among the pioneer inventions in the field of resinous block copolymers are such patents as US-A-3 639 517 to Kitchen and Szalla, US-A-4 080 407 to Fodor, and US-A-4 091 053 to Kitchen.

EP-A-0 436 225, which has to be considered as prior art under Article 54 (3) EPC, relates to a method of preparing tapered block copolymers with vinylarene terminal blocks by charging of an organometal initiator and a vinyl-substituted aromatic compound with various sequences of more of the vinyl-substituted aromatic compound, a conjugated diene, and combinations of the two monomers. EP-A-0 344 140 discloses a process for preparing copolymer sequences coupled by way of an alkyl lithium compound. US-A-4 304 886 is directed to a process for producing a branched polymer having different functionality, comprising reacting a living lithium-terminated polymer with a mixture of two different coupling agents having different functionality.

Much effort has been directed to the preparation of substantially transparent block copolymer resins with a variety of block structures produced by a variety of monomer addition sequences and a variety of coupling agents.

One of the more important applications for substantially transparent block copolymer resins is in the packaging and related industries where there is a need for thermoplastic polymers suitable for use in conventional injection and blow molding and in other methods of forming plastics into containers, tubes, and film. For applications which require blow molding of the thermoplastic resin it is important that the parison have sufficient melt strength to support itself when blow molding larger parts. Better melt strength is normally associated with low melt flow; however, melt flow must be high enough to maintain processability.

### Summary of the Invention

It is an object of this invention to provide resinous copolymers which have improved melt strength properties. It is another object of this invention to provide resinous copolymers which have good melt strength while maintaining processability. It is yet another object of this invention to provide methods for producing these resinous copolymers.

In accordance with this invention copolymers are prepared by a process of sequential charge copolymerization as defined in claim 1. Preferred embodiments of the invention are contained in claims 2 and 3.

### Brief Description of the Drawings

In the drawings which form a part hereof:
Figure 1 is a graph of strain rates versus polymer melt flow when tetraethoxysilane coupling and difunctional coupling were done;
Figure 2 is a graph of strain rates versus polymer melt flow when tetramethoxysilane coupling and difunctional coupling were done;
Figure 3 shows molecular weight distribution curves of a control polymer and of an experimental polymer at several points during polymerization;
Figure 4 is a graph of strain rates versus polymer melt flow when dimethyl isophthalate coupling and difunctional coupling were done; and
Figure 5 is a graph of results of sag tests of controls and of the experimental polymer.

### Detailed Description of the Invention

The polymers of this invention are characterized as resinous, polymodal block copolymers of at least one conjugated diene with at least one monovinylarene, and are prepared so that at least a portion of the final product is of a branched coupled character.

The copolymers contain 55 to 95, preferably 60 to 90, more preferably 65 to 85, percent by weight of copolymerized monovinyl aromatic compound (monovinylarene), and correspondingly 45 to 5, 40 to 10, or 35 to 15 percent by weight of copolymerized conjugated diene. The coupled portions of the resinous, polymodal block copolymers have terminal polymonovinylarene blocks on the extending arms of each linear or radial copolymer molecule, and further contain a central internal block of polyconjugated diene, ignoring any interruption of the internal block by a coupling agent residue. The resinous copolymeric polymodal products also contain portions of linear uncoupled block copolymers of Poly(monovinylarene)-poly(conjugated diene); the linear uncoupled block copolymer content is considered to be an important portion of the resinous product with respect to its overall properties.

The detailed description and tables following show the preferred charging sequences and the results of tests of the properties of the inventive copolymer compared with those of copolymers not prepared in accordance with this invention. The differences in results are significant, with the inventive copolymers exhibiting improved melt strength properties.

### Polymerization

The solution polymerization process is carried out as is known in the art in a hydrocarbon diluent at any suitable temperature such as in the range of -10° to 150°C, more usually 0°to 110°C, at a pressure sufficient to maintain the reaction mixture substantially as a liquid. Preferred are cycloparaffins, alone or in admixture with such as pentane or isooctane. Presently preferred is cyclohexane. As is known, small amounts of polar compounds, such as tetrahydrofuran, can be included in the diluent for vinyl control of the diene polymer blocks, and/or to improve effectiveness of some initiators such as the primary alkyllithium initiators for monovinylarene polymerizations US-A-3 639 517 (Kitchen and Szalla), US-A-4 080 407 (Fodor) and US-A- 4 091 053 (Kitchen) disclose polymerization procedures.

The conjugated diene monomers which can be used contain 4 to 6 carbon atoms and include 1,3-butadiene, 2-methyl-1,3-butadiene, 2-ethyl-1,3-butadiene, 2,3-dimethyl-1,3-butadiene and 1,3-pentadiene and mixtures thereof. Presently preferred is 1,3-butadiene.

The monovinylaromatic monomers which can be used contain 8 to 12 carbon atoms and include styrene, alpha-methylstyrene, p-vinyltoluene, m-vinyltoluene, o-vinyltoluene, 4-ethylstyrene, 3-ethylstyrene, 2-ethylstyrene, 4-tert-butylstyrene and 2,4-dimethylstyrene and mixtures thereof. Presently preferred is styrene.

The initators can be any of the organomonoalkali metal compounds known for such purposes. Preferably employed are the hydrocarbylmonoalkali metal compounds which correspond to the formula RM in which R is a hydrocarbyl aliphatic, cycloaliphatic, or aromatic radical, preferably alkyl, and M is an alkali metal, preferably lithium. Presently preferred are alkylmonolithium initators such as sec- and n-butyllithium. The amounts of monoalkali metal-based initiator employed depend upon the desired polymer or incremental block molecular weight, as is known in the art, and are readily determinable from the ranges of molecular weight desired, making due allowance for traces of poisons in the feed streams.

The polymerization is conducted in the substantial absence of air or moisture, preferably under an inert atmosphere. The resulting polymers contain a very high percentage of molecules in which an alkali metal atom is positioned at an end of the polymer chains. Of course, traces of impurities present in the feeds, such as water or alcohol, tend to reduce the amount of monoalkali metal-terminated polymer formed. Thereafter, the coupling steps are performed.

### Coupling Reaction

The term "coupling" as used in this application means the bringing together and joining, by means of one or more central coupling atoms or coupling moieties, two or more of the living monoalkali metal-terminated polymer chains.

Typically, the total amount of coupling agent is in the range of 0.1 to 10 phm (parts per 100 parts by weight of total monomers employed in the polymerization), presently preferably 0.2 to 1 phm.

For the purposes of this application, polyfunctional (or multifunctional) coupling agents are defined as those having three or more active sites for reaction with polymer lithiums. Polyfunctional coupling agents considered useful in the first coupling step of the inventive process include alkoxysilanes, such as Si(OR)₄, HSi(OR)₃, RSi(OR)₃; cyclic anhydrides such as 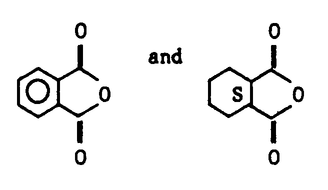
and their esters and diesters, such as 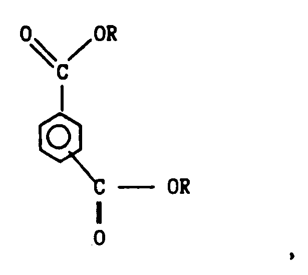
in which R can be alkyl groups containing from 1 to 18 carbon atoms, with those containing 1 to 4 carbon atoms preferred. Examples of suitable polyfunctional coupling agents include tetramethoxysilane, tetraethoxysilane, tetrabutoxysilane, tetradodecyloxysilane, trimethoxysilane, triethoxysilane, trihexyloxysilane, phthalic anhydride, 1,2-cyclohexanedicarboxylic anhydride, dimethyl phthalate, dibutyl phthalate, diethyl 1,2-cyclohexanedicarboxylate, dimethyl isophthalate, dihexyl isophthalate, dimethyl terephthalate, diethyl terephthalate and didodecyl terephthalate. Each acyl group of the esters and anhydrides is considered to be difunctional for coupling since two molecules of polymer lithium can react with the acyl group. Other acceptable polyfunctional coupling agents are multiisocyanates, multiimines, multianhydrides, multihalides, particularly halosilanes, multiesters and multiketones. Presently preferred are alkoxysilanes such as tetraethoxysilane, tetramethoxysilane, trimethyoxysilane and triethoxysilane and esters such as dimethyl isophthalate. Most preferred are tetraethoxysilane and tetramethoxysilane. Mixtures of two or more polyfunctional coupling agents can be used.

The first coupling step should be substantially completely reacted before adding the second coupling agent. If both types of coupling agents are added together, difunctional coupling will dominate. The progress of the first coupling step can be determined by gel permeation chromatography (gpc) which will show multifunctional branching by the appearance of several new peaks compared with the gpc curves of products made with essentially difunctional coupling agents.

Coupling agents considered useful in the second coupling step of the inventive process include a wide range of essentially difunctional coupling agents as are known in the art, such as dialdehydes, diketones, dihalosilanes, diepoxides, monoesters, lactones, vegetable oils and epoxidized vegetable oils. Examples include hexanedial, phthalaldehyde, 2,5-hexanedione, dichlorodimethylsilane, dichlorodiphenylsilane, butadiene dimer diepoxide, methyl benzoate, butyrolactone, refined soybean oil and epoxidized soybean oil. Presently preferred as the essentially difunctional agent for the second coupling step of this invention is epoxidized vegetable oil. Most preferred is epoxidized soybean oil such as Vikoflex® 7170 from Viking Chemical.

Combinations of two or more essentially difunctional coupling agents, including combinations from different functional groups, can be used.

Any effective amount of the coupling agent can be employed in either of the two coupling steps. While the amount is not believed to be particularly critical, an amount sufficient to give multifunctional coupling as determined by gel permeation chromatography is presently preferred in the first coupling step. It is essential that in the first coupling step, the amount of polyfunctional coupling agent added be insufficient for complete coupling of all of the growing polymer chains. In the second coupling step the amount of difunctional coupling agent used is equal to, or in excess of, the amount needed to complete the coupling.

The amount of multifunctional coupling agent in the first step is 5 to 80 weight percent of the total amount of coupling agents, preferably 10 to 50 weight percent, more preferably 15 to 30 weight percent. The amount of essentially difunctional coupling agent in the second step is 95 to 20 weight percent of the total coupling agents, preferably 90 to 50 weight percent, more preferably 85 to 70 weight percent.

The reactions are carried out under conditions sufficient to cause multifunctional coupling in the first coupling step and difunctional coupling in the second coupling step. The temperature of the coupling steps can be any effective temperature and is generally between 30 and 150°C. Preferably the temperatures is between 50 and 130°C, and more preferably 80 to 110°C. The temperature of the first and second coupling steps can be the same or different. Excess physical conditions, such as higher reaction temperatures, should be avoided in the second coupling step to minimize deleterious reactions.

### Polymer Recovery

At the conclusion of the two-step coupling process, the system is treated with an active hydrogen compound such as water, alcohol, phenols or linear saturated aliphatic mono- and dicarboxylic acids to remove the lithium from the polymer. Preferably, the polymer cement, i.e. the polymer in the polymerization solvent, is treated with terminating agents such as water and carbon dioxide.

The resins are then stabilized with suitable stabilizers, for example, a combination of a hindered phenol and an organophosphite, specifically, octadecyl 3-(3',5'-di-t-butyl-4'-hydroxyphenyl) propionate and tris-nonylphenylphosphite. After stabilization, the hydrocarbon diluent is then flashed off the polymer solution to increase the solids content.

The resulting copolymers have a melt flow according to ASTM D 1238-86 at 200°C with a 4.9 kg weight from 1 to 15 g/10 min.; more preferably, from 5 to 10 g/10 min. ; most preferably, from 6 to 8 g/10 min.

### The Copolymers

The polymodal resinous block copolymers produced by the methods of this invention contain a mixture of two or more different length butadiene-styrene copolymers coupled with a multifunctional coupling agent and an essentially difunctional coupling agent. The fraction of polymer coupled with the multifunctional coupling agent is substantially branched; the fraction of polymer coupled with the difunctional coupling agent is substantially linear.

The following examples will describe in more detail the experimental process used and the polymodal block copolymers obtained as a result of the process.

### Examples

In the following examples, dried cyclohexane (85%), butadiene (Texas El Paso), and styrene (Stirling Chemical) were used. The dried cyclohexane and styrene were given a nitrogen sparge and the solvent and monomers were stored in charge tanks. Dry, uninhibited monomers were stored in a deep freezer. n-Butyllithium was purchased from Lithium Corporation of America and was charged as a 2 weight percent solution in cyclohexane. Coupling agents are listed below:

| Coupling Agent | Source | Charge Solution |
|---|---|---|
| Tetramethoxysilane | PCR Inc. | 0.2g/mL in Cyclohexane |
| Tetraethoxysilane | PCR Inc. | 0.2g/mL in Cyclohexane |
| Dimethylisophthalate | Aldrich | 0.2g/mL in Tetrahydrofuran |
| Epoxidized Vegetable Oil (Vikoflex® 7170) | Viking Chemical | 0.5g/mL in Cyclohexane |

Polymerizations were carried out in an 8.8 liter stainless steel reactor. The monomer, solvent, and initiator charge tanks were connected with direct lines to the reactor. Weights of solvent, monomer, and initiator charged to the reactor were determined by measuring differences in weight on an electronic balance. Pressure was maintained by nitrogen and polymerizations were adiabatic once initiated at 50°C. When required, warming was controlled by automatically-regulated, steam addition to the water jacket.

The following polymerization recipe was used in the examples with changes in coupling agents and n-butyllithium levels. phm is the quantity in parts per hundred parts by weight of total monomer charge.

| Polymerization Recipe | |
|---|---|
| Component | Concentration (phm) |
| Cyclohexane | 210 |
| Styrene | 75 |
| Butadiene | 25 |
| Tetrahydrofuran (THF) | 0.04 |
| n-Butyllithium | approx. 0.18 |
| Coupling Agents | 0.40 |

| Charge Order | | |
|---|---|---|
| | Component | Concentration, phm |
| Step #1 | Cyclohexane | 140 |
| | Tetrahydrofuran | 0.04 |
| | n-Butyllithium | 0.031 |
| | Styrene | 40 |
| | Cyclohexane^{a} | 23.4 |
| | Time (min.) | 12 |
| Step #2 | n-Butyllithium | 0.033 |
| | Styrene | 20 |
| | Time (min.) | 12 |
| | Butadiene | 8 |
| | Cyclohexane^{a} | 20 |
| | Time (min.) | 16 |
| Step #3 | n-Butyllithium^{b} | 0.114 |
| | Styrene | 15 |
| | Time (min.) | 12 |
| Step #4 | Butadiene | 17 |
| | Cyclohexane^{a} | 20 |
| | Time (min.) | 16 |
| Step #5 | Temp., °C | 90 |
| | Polyfunctional Coupling Agent | Variable(x)^{c} |
| | Cyclohexane^{a} | 6.6 |
| | Time (min.) | 10 |
| Step #6 | Temp., °C | 90 |
| | Difunctional Coupling Agent | 0.4-x^{c} |
| | Cyclohexane^{a} | 6.6 |
| | Time (min.) | 16 |
| Work Up | Water | 0.2 |
| | Time (min.) | 5 |
| | Carbon Dioxide | 0.4 |
| | Time (min.) | 20 |
| | Antioxidant | 1.25 |
| | Time (min.) | 5.0 |
| | Temp., °C | 90 |
| | Flash Polymer solution @ 178-180°C | |

| | | |
|---|---|---|
| ^{a}After each addition of monomer, initiator, or additive the feed lines were rinsed with 91 g. cyclohexane solvent. | | |
| ^{b}The third n-butyllithium charge was adjusted to control the final melt flow at 7.0-9.0 g/10 min. | | |
| ^{c}The amount of polyfunctional coupling agent (x) varies. The total amount of polyfunctional coupling agent and difunctional coupling agent is 0.4 phm; thus the amount of difunctional coupling agent is the difference between 0.4 phm and x. | | |

Cyclohexane was flashed from the resin leaving about 14 weight percent cyclohexane in the polymer. The polymer was dried in a vacuum oven (92°C) for one hour, chopped, and dried another hour in the vacuum oven.

Polymer molecular weight was determined by gel permeation chromatography using a Waters Ultrastyragel column with tetrahydrofuran as solvent and a UV detector. Melt flows were measured according to ASTM D 1238-86 using an extrusion plastometer at 200°C with a 4.9 kg weight.

"Sag tests" of the inventive copolymer were done using extruded sheet. The test was done with a Comet Labmaster Model L-5 Thermoformer with the bottom heater on full and the top heater off. The dwell time was 60 seconds and sag was measured. The sheet thickness was measured with a TMI Model 549 Micrometer. Samples about 35.5 cm by about 15.5 cm were used. The samples were clamped at the ends of the longer dimension and the distance between clamps was 33 cm.

A laboratory test was developed to give an indication of the polymer melt strength. A Rheometrics Mechanical Spectrometer (RMS) (Rheometrics, Inc., Piscataway, NJ) measures strain versus time at a constant stress. A low strain rate indicates more chain entanglements and a higher melt strength than a high strain rate. The strain rate tests were carried out with a cone and plate configuration to measure strain versus time at 190°C with a constant stress of 0.1 N/cm² (1 x 10⁴ dynes/cm²). A minimum of four hours warm-up time was used to bring the RMS to equilibrium temperature before starting the test runs. Strain rates should be compared between samples with the same melt flow since the polymer melt strength is also a function of molecular weight.

### Example I

This example illustrates the preparation of butadiene-styrene copolymers with improved melt strength by partially coupling the living polymer with a multifunctional coupling agent [tetraethoxysilane - (OEt)₄Si] and completion of the coupling with a conventional, essentially bifunctional coupling agent (Vikoflex® 7170).

The polymers are summarized in Table I. Polymers 1 and 2 are control resins made to different melt flows without a multifunctional coupling agent and with the Vikoflex® coupling agent. Polymers 3 through 7 are invention polymers made with different levels of n-butyllithium, tetraethoxysilane, and Vikoflex®.

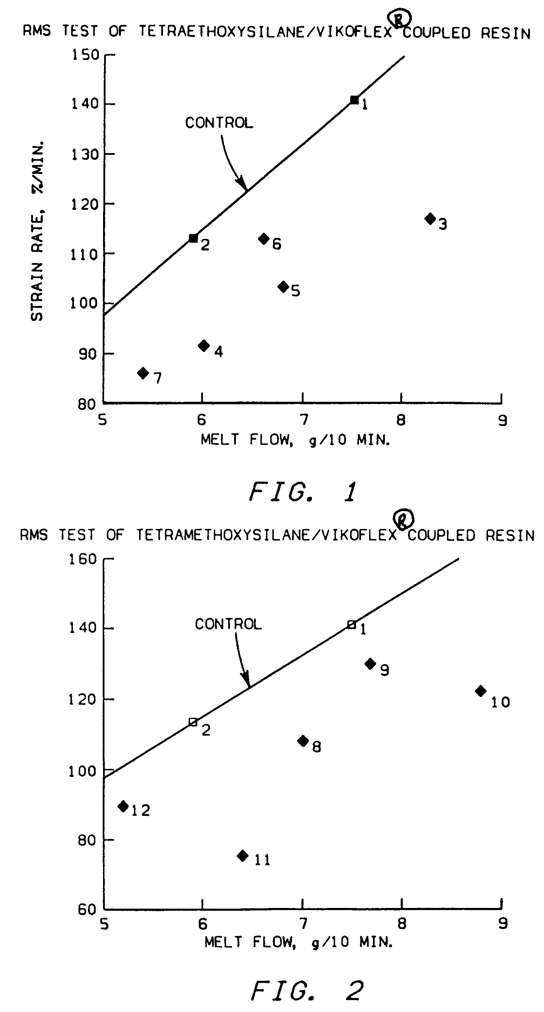

The Rheometrics Mechanical Spectrometer (RMS) strain rates in %/min at 190°C for these polymers (Table I) show that the invention polymers have lower values (higher melt strengths) than control polymers of the same viscosity. In order to clearly show the differences in values, the strain rate values from Table I are plotted in Figure 1 versus the polymer melt flow. A line drawn through the two control polymer points shows the normal relationship between the melt flow and strain rate. Samples falling below the line, low strain rate, would be expected to show improved melt strengths over control polymers with the same melt flow. Invention samples 3 through 7 are clearly below the line, demonstrating improved melt strengths from the two-step coupling.

Gel permeation chromatography provides information about the polymer structures. Control Polymer 1 has a weight average molecular weight (Mw) of 138,000 grams per mole (atomic mass units (amu)) and a number average molecular weight (Mn) of 89,000 grams per mole (amu) for a Mw/Mn ratio of 1.55, while Control Polymer 2 has a Mw/Mn ratio of 1.62. Invention Polymer 4 has a Mw of 156,000 grams per mole (amu) and an Mn of 92,000 grams per mole (amu) for a Mw/Mn ratio of 1.69, while Polymer 6 has a Mw/Mn ratio of 1.72.

**Table I**

| Tetraethoxysilane Coupling | | | | | | | |
|---|---|---|---|---|---|---|---|
| Polymer | NBL phm | | | Coupling Agent, phm | | Melt Flow, g/10min | Strain Rate, %/min |
| | #1 | #2 | #3 | #1 (EtO)₄Si | #2 Vikoflex® | | |
| 1^{a} | 0.031 | 0.032 | 0.100 | -0- | 0.40 | 7.5 | 141 |
| 2^{a} | 0.031 | 0.032 | 0.095 | -0- | 0.40 | 5.9 | 113 |
| 3 | 0.031 | 0.032 | 0.140 | 0.08 | 0.32 | 8.3 | 117 |
| 4 | 0.031 | 0.032 | 0.128 | 0.08 | 0.32 | 6.0 | 91 |
| 5 | 0.031 | 0.032 | 0.132 | 0.08 | 0.32 | 6.8 | 103 |
| 6 | 0.031 | 0.062 | 0.070 | 0.08 | 0.32 | 6.6 | 113 |
| 7 | 0.031 | 0.032 | 0.123 | 0.08 | 0.32 | 5.4 | 86 |

| | | | | | | | |
|---|---|---|---|---|---|---|---|
| ^{a}Control runs | | | | | | | |

### Example II

Tetramethoxysilane [(OMe)₄Si] was used as the multifunctional coupling agent in this example. The polymers recipes and strain rates are shown in Table II. Plots of the polymer strain rates against melt flows are shown in Figure 2. Polymers 8 through 12 have strain rates well below the line drawn through the points for control Polymers 1 and 2 indicating higher melt strengths for invention polymers 8 through 12.

**Table II**

| Tetramethoxysilane Coupling | | | | | | | |
|---|---|---|---|---|---|---|---|
| Polymer No. | NBL, phm | | | Coupling Agent, phm | | Melt Flow, g/10min | Strain Rate, %/min |
| | #1 | #2 | #3 | #1 (MeO)₄Si | #2 Vikoflex® | | |
| 8 | 0.031 | 0.032 | 0.135 | 0.04 | 0.36 | 7.0 | 108 |
| 9 | 0.031 | 0.040 | 0.135 | 0.06 | 0.34 | 7.7 | 130 |
| 10 | 0.034 | 0.034 | 0.125 | 0.06 | 0.34 | 8.8 | 122 |
| 11 | 0.034 | 0.034 | 0.113 | 0.06 | 0.34 | 6.4 | 75 |
| 12 | 0.031 | 0.034 | 0.135 | 0.06 | 0.34 | 5.2 | 85 |

A gel permeation chromatography examination of Polymer 9 shows that it has a Mw of 166,000 grams per mole (amu) and Mn of 95,000 grams per mole (amu) for a Mw/Mn ratio of 1.75.

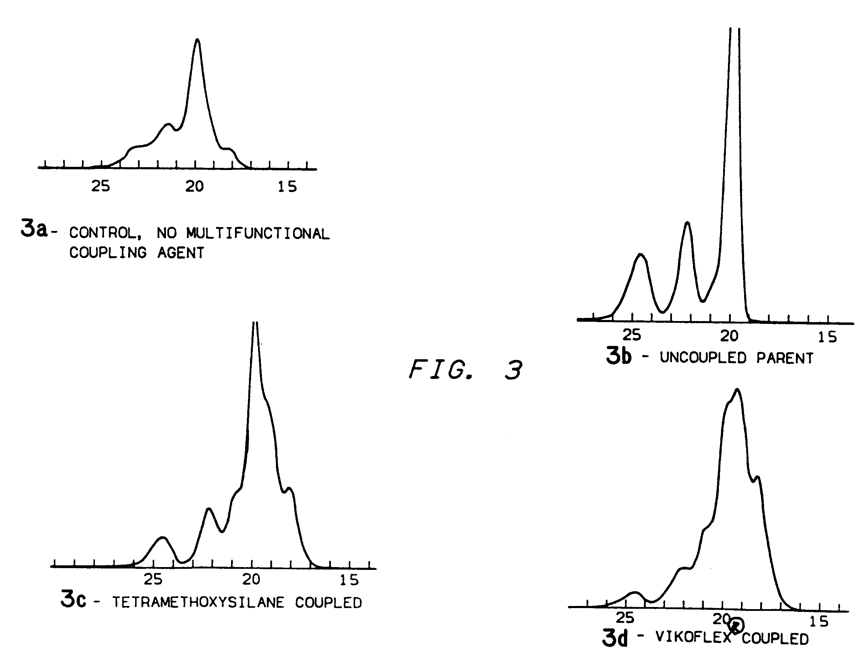

The difference in structure between polymers made according to the present invention compared with polymers made with only bifunctional coupling agents is readily seen in the molecular weight distribution (MWD) curves produced by gel permeation chromatography. The ordinate (vertical) scale represents the magnitude of the peaks and the abscissa (horizontal) scale represents the gpc elution count in arbitrary units for comparison of figures. In Figure 3, curve 3a is a MWD curve of a typical control polymer made with a bifunctional coupling agent. Curves 3b, 3c, and 3d are MWD curves of the polymerization mixture at several points during the polymerization of a polymer made in a manner similar to that used for the preparation of Polymer 8. Curve 3b shows the MWD after all three n-butyllithium charges and clearly shows the three different polymer segments before any coupling. The multifunctional coupling (curve 3c) changes the gpc trace, especially the shape of the larger (highest molecular weight) peak. After the Vikoflex® coupling step (curve 3d), further changes in the curve occur. A comparison of curve 3d with 3a clearly shows the changes in MWD by the process of this invention.

### Example III

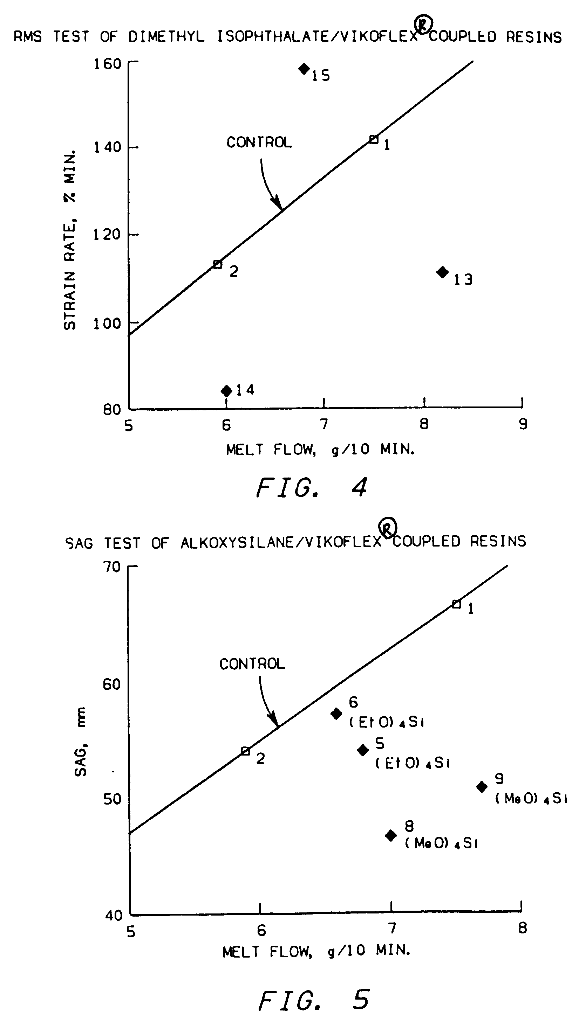

Several polymers were prepared using dimethyl isophthalate (DMIP) as the multifunctional coupling agent. Polymers 13, 14, and 15 are described in Table III with their melt flows and strain rates. Plots in Figure 4 of the polymer melt flow against strain rate show that Polymers 13 and 14 are below the line through the two control polymers. Polymers made with DMIP have unusually low Mw/Mn ratios. Polymer 14 has a Mw of 139,000 grams per mole (amu) and a Mn of 125,000 grams per mole (amu) for a Mw/Mn ratio of 1.11. Polymer 15 has a Mw/Mn ratio of only 1.06, indicating relatively low multifunctional coupling under these conditions. The DMIP has a relatively low solubility in cyclohexane. At the lower level of DMIP (0.06 phm) used in Polymer 15, a longer reaction time is believed to be needed to obtain enough multifunctional coupling for good melt strength.

**Table III**

| Dimethylisophthalate Coupling | | | | | | | |
|---|---|---|---|---|---|---|---|
| Polymer No. | NBL, phm | | | Coupling Agent, phm | | Melt Flow, g/10 min | Strain Rate, %/min |
| | #1 | #2 | #3 | #1 DMIP^{a} | #2 Vikoflex® | | |
| 13 | 0.031 | 0.032 | 0.132 | 0.08 | 0.32 | 8.2 | 111 |
| 14 | 0.031 | 0.032 | 0.125 | 0.08 | 0.32 | 6.0 | 84 |
| 15 | 0.031 | 0.032 | 0.125 | 0.06 | 0.34 | 6.8 | 158 |

| | | | | | | | |
|---|---|---|---|---|---|---|---|
| ^{a}DMIP = Dimethyl isophthalate | | | | | | | |

### Example IV

A sag test was used to further demonstrate the advantages of polymers prepared according to the present invention. A sheet about 0.57 mm thick was extruded from the polymers and held in a hot thermoformer. After the sheet had been heated for 60 seconds, the amount of sag was measured. As shown in Table IV, polymers prepared with both a multifunctional coupling agent and a bifunctional coupling agent had less sag than control polymers made without the multifunctional coupling agent. Higher melt strength polymers would be expected to sag less than polymers with low melt strength.

**Table IV**

| Sag Test | | | | |
|---|---|---|---|---|
| Polymer No. | Coupling Agent | Melt Flow, g/10 min | Sheet Thickness,mm | Sag, mm |
| 1^{a} | Vikoflex®, 0.4 phm | 7.5 | 0.58 | 66.7 |
| 2^{a} | Vikoflex®, 0.4 phm | 5.9 | 0.58 | 54.0 |
| 5 | Tetraethoxysilane, 0.08 phm/Vikoflex®, 0.32 phm | 6.8 | 0.56 | 54.0 |
| 6 | Tetraethoxysilane, 0.08 phm/Vikoflex®, 0.32 phm | 6.6 | 0.56 | 57.2 |
| 8 | Tetramethoxysilane, 0.04 phm/Vikoflex®, 0.36 phm | 7.0 | 0.56 | 46.6 |
| 9 | Tetramethoxysilane, 0.06 phm/Vikoflex®, 0.34 phm | 7.7 | 0.56 | 50.8 |

| | | | | |
|---|---|---|---|---|
| ^{a}Control polymers. | | | | |

The sag test results are plotted in Figure 5 against polymer melt flow values. All invention sample points are located below the control line, indicating better melt strength for polymers made with the two-step coupling.

### Example V

Physical properties of several of the polymers from the above examples were determined by injection molding test specimens for evaluation. The results are described in Table V. Polymers 16 and 17 are control polymers prepared in a manner similar to Polymers 1 and 2, but with larger reactor volumes. Polymer 18 was prepared using tetraethoxysilane in a manner similar to that used for the preparation of Polymer 5, but with a larger reactor volume. Polymers 16, 17, and 18 have melt flow values in g/10 min of 6.1, 8.1 and 8.5, respectively. The strain rates in %/min. of polymers 16, 17 and 18 are 100, 143 and 85, respectively.

**Table V**

| Polymer Physical Properties | | | | | | | |
|---|---|---|---|---|---|---|---|
| Sample No. | Haze/Blueness | Flexural Modulus,MPa | Tensile, MPa | | Elongation,% | | Izod Impact^{a} |
| | | | Yield | Break | Yield | Break | |
| 16^{b} | 2.0/-4.5 | 1489 | 28 | 30 | 4.2 | 264 | 10.3 |
| 17^{b} | 1.6/-6.4 | 1488 | 27 | 30 | 4.4 | 265 | 16.7 |
| 18^{c} | 3.6/-3.5 | 1448 | 27 | 26 | 4.1 | 233 | 12.8 |
| 3^{c} | 4.9/-4.4 | 1472 | 26 | 27 | 3.4 | 236 | 16.3 |
| 10^{d} | 3.1/-3.2 | 1509 | 31 | 26 | 4.2 | 231 | 11.2 |
| 11^{d} | 4.5/-3.2 | 1409 | 30 | 30 | 4.2 | 282 | 15.1 |
| 13^{e} | 1.9/-7.9 | 1408 | 23 | 26 | 4.6 | 252 | 31.7 |
| 14^{e} | 3.2/-4.8 | 1457 | 27 | 29 | 4.2 | 261 | 14.1 |
| 15^{e} | 2.0/-6.3 | 1455 | 25 | 28 | 4.2 | 264 | 18.7 |

| | | | | | | | |
|---|---|---|---|---|---|---|---|
| ^{a}Notched Izod, J/M | | | | | | | |
| ^{b}Control polymers Vikoflex® coupled | | | | | | | |
| ^{c}Tetraethoxysilane/Vikoflex® coupled | | | | | | | |
| ^{d}Tetramethoxysilane/Vikoflex® coupled | | | | | | | |
| ^{e}Dimethyl isophthalate/Vikoflex® coupled | | | | | | | |

The results in Table V show that the invention polymers have physical properties similar to the control polymers. Variations in physical properties are also observed as a result of differences in melt flow. These results show that the two-step coupling technique of this invention does not cause a reduction in molded product properties.

## Claims

1. A method for preparing a copolymer product, wherein at least a portion of the final copolymer product is branched coupled, by a sequential charge copolymerization comprising the sequential steps of: polymerizing in solution at least two charges, at least one of said charges being a conjugated diene and at least one of said charges being a monovinylarene, thereafter coupling with a polyfunctional coupling agent, wherein the amount used is insufficient for complete coupling of all of the growing polymer chains, and thereafter, coupling with a difunctional coupling agent, wherein the amount used is that which is needed to effect desired coupling.

2. The method of claim 1, characterized in that said polymerizing in solution comprises polymerizing at least one monovinylarene monomer and at least one conjugated diene monomer in a ratio of 55 to 95 weight percent monovinylarene and 45 to 5 weight percent conjugated diene, by a sequential charge polymerization process
wherein at least two separate charges consisting of said conjugated diene, at least two separate charges consisting of said monovinylarene, and at least two charges of a monoalkali metal initiator are employed;
at least one separate charge of each of said monovinylarene and of said conjugated diene follows the last charge of said monoalkali metal initiator; at least one separate charge of said conjugated diene precedes the last charge of said monoalkali metal initiator; and
each separate monomer charge homopolymerizes to substantial completion prior to addition of any subsequent charge.

3. The method of claim 1, characterized in that said polymerizing in solution comprises polymerizing at least one monovinylarene monomer and at least one conjugated diene monomer in a ratio of 55 to 95 weight percent monovinylarene and 45 to 5 weight percent conjugated diene, by a sequential charge polymerization process comprising;
charging with a monovinylarene and a monoalkali metal initiator;
charging with a monovinylarene, and conjugated diene monomer and a monoalkali initiator;
charging with a monovinylarene and a monoalkali initiator; and
charging with a conjugated diene monomer.

4. The method of any of the preceding claims wherein said difunctional coupling agent is selected from dialdehydes, diketones, dihalosilanes, diepoxides, monoesters, lactones, vegetable oils and epoxidized vegetable oils.

5. The method of any of the preceding claims wherein said polyfunctional coupling agent is an alkoxysilane, a cyclic anhydride or a diester.

6. The method of claim 5 wherein said polyfunctional coupling agent is dimethyl isophtalate, tetramethoxysilane, tetraethoxysilane or phthalic anhydride.

7. The method of any of the preceding claims wherein said difunctional coupling agent is epoxidized vegetable oil.

8. The method of any of the preceding claims wherein said monovinylarene is styrene and said conjugated diene is 1,3-butadiene.

9. The method of claim 2 or 3 wherein said at least one monovinylarene monomer is styrene, said at least one conjugated diene monomer is 1,3-butadiene, said monoalkali initiator is n-butyllithium, said polyfunctional coupling agent is tetraethoxysilane, and said difunctional coupling agent is epoxidized vegetable oil.

## Patentansprüche

1. Verfahren zur Herstellung eines Copolymerprodukts, wobei mindestens ein Teil des schließlich erhaltenen Copolymerprodukts verzweigt gekuppelt ist, und zwar durch eine Copolymerisation mit aufeinanderfolgender Zugabe, die die folgenden aufeinanderfolgenden Stufen umfaßt: Polymerisation in Lösung von mindestens zwei Zugaben, wobei mindestens eine der Zugaben ein konjugiertes Dien ist und mindestens eine der Zugaben ein Monovinylaren ist, anschließend Kupplung mit einem polyfunktionellen Kupplungsmittel, wobei die verwendete Menge nicht für eine vollständige Kupplung aller wachsenden Polymerketten ausreicht, und anschließend Kupplung mit einem difunktionellen Kupplungsmittel, wobei die Menge der Menge entspricht, die erforderlich ist, um die gewünschte Kupplung zu bewirken.

2. Verfahren nach Anspruch 1, dadurch gekennzeichnet, daß die Polymerisation in Lösung das Polymerisieren von mindestens einem Monovinylarenmonomeren und mindestens einem konjugierten Dienmonomeren in einem Verhältnis von 55 zu 95 Gew.-% Monovinylaren und 45 bis 5 Gew.-% konjugiertem Dien durch ein Polymerisationsverfahren mit aufeinanderfolgender Zugabe umfaßt,
wobei mindestens zwei getrennte Zugaben aus dem konjugierten Dien bestehen, mindestens zwei getrennte Zugaben aus dem Monovinylaren bestehen und mindestens zwei Zugaben an Monoalkalimetallinitiator eingesetzt werden;
mindestens eine getrennte Zugabe aus dem Monovinylaren und dem konjugierten Dien der letzten Zugabe des Monoalkalimetallinitiators folgt;
mindestens eine getrennte Zugabe des konjugierten Diens der letzten Zugabe des Monoalkalimetallinitiators vorausgeht; und
jede getrennte Monomerzugabe bis zum weitgehenden Abschluß vor der Zugabe irgend einer weiteren Zugabe homopolymerisiert.

3. Verfahren nach Anspruch 1, dadurch gekennzeichnet, daß die Polymerisation in Lösung das Polymerisieren mindestens eines Monovinylarenmonomeren und mindestens eines konjugierten Dienmonomeren in einem Verhältnis von 55 bis 95 Gew.-% Monovinylaren und 45 bis 5 Gew.-% konjugiertem Dien durch ein Polymerisationsverfahren mit aufeinanderfolgender Zugabe umfaßt, daß folgende Stufen umfaßt:
Zugabe eines Monovinylarens und eines Monoalkalimetallinitiators;
Zugabe eines Monovinylarens und eines konjugierten Dienmonomeren und eines Monoalkaliinitiators;
Zugabe eines Monovinylarens und eines Monoalkaliinitiators; und
Zugabe eines konjugierten Dienmonomeren.

4. Verfahren nach einem der vorstehenden Ansprüche, wobei das difunktionelle Kupplungsmittel unter Dialdehyden, Diketonen, Dihalogensilanen, Diepoxiden, Monoestern, Lactonen, Pflanzenölen und epoxidierten Pflanzenölen ausgewählt ist.

5. Verfahren nach einem der vorstehenden Ansprüche, wobei es sich bei dem polyfunktionellen Kupplungsmittel um ein Alkoxysilan, ein cyclisches Anhydrid oder einen Diester handelt.

6. Verfahren nach Anspruch 5, wobei es sich bei dem polyfunktionellen Kupplungsmittel um Dimethylisophthalat, Tetramethoxysilan, Tetraethoxysilan oder Phthalsäureanhydrid handelt.

7. Verfahren nach einem der vorstehenden Ansprüche, wobei es sich bei dem difunktionellen Kupplungsmittel um ein epoxidiertes Pflanzenöl handelt.

8. Verfahren nach einem der vorstehenden Ansprüche, wobei es sich bei dem Monovinylaren um Styrol und bei dem konjugierten Dien um 1,3-Butadien handelt.

9. Verfahren nach Anspruch 2 oder 3, wobei es sich bei dem mindestens einen Monovinylarenmonomeren um Styrol handelt, es sich bei dem mindestens einem konjugierten Dienmonomeren um 1,3-Butadien handelt, es sich bei dem Monoalkaliinitiator um n-Butyllithium handelt, es sich bei dem polyfunktionellen Kupplungsmittel um Tetraethoxysilan handelt und es sich bei dem difunktionellen Kupplungsmittel um ein epoxidiertes Pflanzenöl handelt.

## Revendications

1. Un procédé pour préparer un produit copolymère dans lequel au moins une partie du produit copolymère final est couplée, ramifiée par une copolymérisation à charge séquentielle comprenant les étapes séquentielles consistant à : polymériser en solution au moins deux charges, au moins l'une desdites charges étant un diène conjugué et au moins l'une desdites charges étant un monovinylarène, puis à coupler avec un agent de couplage polyfonctionnel où la quantité utilisée est insuffisante pour le couplage complet de toutes les chaînes de polymères croissants et ensuite à coupler avec un agent de couplage difonctionnel où la quantité utilisée est celle qui est nécessaire pour effectuer le couplage désiré.

2. Le procédé selon la revendication 1, caractérisé en ce que ladite polymérisation en solution comprend la polymérisation d'au moins un monomère de monovinylarène et d'au moins un monomère diénique conjugué selon un rapport de 55 à 95 % en poids de monovinylarène et de 45 à 5 % en poids de diène conjugué par un procédé de polymérisation à charge séquentielle :
dans lequel au moins deux charges séparées se composant dudit diène conjugué, au moins deux charges séparées se composant dudit monovinylarène et au moins deux charges d'amorceur de métal mono-alcalin sont utilisées ;
au moins une charge séparée de chacun dudit monovinylarène et dudit diène conjugué suit la dernière charge dudit amorceur de métal mono-alcalin ; au moins une charge séparée dudit diène conjugué précède la dernière charge dudit amorceur de métal mono-alcalin ; et
chaque charge de monomère séparé s'homopolymérise essentiellement complètement avant l'addition d'une quelconque charge subséquente.

3. Le procédé selon la revendication 1, caractérisé en ce que ladite polymérisation en solution comprend la polymérisation d'au moins un monomère de monovinylarène et d'au moins un monomère diénique conjugué dans un rapport de 55 à 95 % en poids de monovinylarène et de 45 à 5 % en poids de diène conjugué par un procédé de polymérisation à charge séquentielle comprenant :
la charge avec un monovinylarène et un amorceur de métal mono-alcalin ;
la charge avec un monovinylarène et un monomère diénique conjugué et un amorceur de métal mono-alcalin ;
la charge avec un monovinylarène et un amorceur de métal mono-alcalin ; et
la charge avec un monomère diénique conjugué.

4. Le procédé selon l'une quelconque des revendications précédentes, dans lequel ledit agent de couplage difonctionnel est choisi parmi les dialdéhydes, les dicétones, les dihalosilanes, les diépoxydes, les monoesters, les lactones, les huiles végétales et les huiles végétales époxydées.

5. Le procédé selon l'une quelconque des revendications précédentes, dans lequel ledit agent de couplage polyfonctionnel est un alcoxysilane, un anhydride cyclique ou un diester.

6. Le procédé selon la revendication 5, dans lequel ledit agent de couplage polyfonctionnel est l'isophtalate de diméthyle, le tétraméthoxysilane, le tétraéthoxysilane ou l'anhydride phtalique.

7. Le procédé selon l'une quelconque des revendications précédentes, dans lequel ledit agent de couplage difonctionnel est une huile végétale époxydée.

8. Le procédé selon l'une quelconque des revendications précédentes, dans lequel ledit monovinylarène est du styrène et ledit diène conjugué est du 1,3-butadiène.

9. Le procédé selon la revendication 2 ou 3, dans lequel au moins un monomère de monovinylarène est le styrène, au moins ledit monomère diénique conjugué est le 1,3-butadiène, ledit initiateur de métal mono-alcalin est le n-butyllithium et l'agent de couplage polyfonctionnel est le tétraéthoxysilane et ledit agent de couplage difonctionnel est une huile végétale époxydée.
